# EUROPÄISCHE PATENTSCHRIFT

(11) **EP 2 708 412 B1**
(45) Veröffentlichungstag und Bekanntmachung des Hinweises auf die Patenterteilung: **14.12.2016**
(21) Anmeldenummer: 13184415.1
(22) Anmeldetag: 13.09.2013
(51) Int. Cl.: B60N 2/68, B60N 2/22

(54) **SITZ MIT AM BODEN ABGESTÜTZTER RÜCKENLEHNE**
SEAT WITH BACKREST THAT IS SUPPORTED ON THE FLOOR
SIÈGE DOTÉ D'UN DOSSIER AVEC APPUI AU SOL

(30) Priorität: 14.09.2012 DE 102012108638
(43) Veröffentlichungstag der Anmeldung: 19.03.2014
(73) Patentinhaber: GRAMMER AG, 92224 Amberg (DE)
(72) Erfinder: Schulz, Christian, 38704 Liebenburg (DE)
(74) Vertreter: Hannke, Christian

(56) Entgegenhaltungen:
- EP-A1- 1 728 673
- EP-A1- 2 123 194
- WO-A1-2008/015527
- DE-T5-112007 002 640
- FR-A5- 2 200 803
- US-A1- 2005 168 041

## Beschreibung

Die Erfindung betrifft einen Sitz, insbesondere einen Fahrzeugsitz, mit einem Sitzteil, welches eine Sitzfläche aufweist und gegenüber einer Bodenfläche im Bereich der Sitzvorderseite abgestützt ist, und mit einer Rückenlehne, die mit dem Sitzteil mittels einer Schwenkachse schwenkbar verbunden ist, gemäß dem Oberbegriff des Patentanspruches 1.

Derartige Fahrzeugsitze sind hinreichend bekannt. Üblicherweise bestehen derartige Sitze, insbesondere Fahrzeugsitze, aus dem genannten Sitzteil, auf den sich die Person setzt, und einer an dem Sitzteil drehbar bzw. schwenkbar angeordneten Rückenlehne, wobei die Rückenlehne in ihrem unteren Bereich, also mit ihrem unteren Ende, schwenkbar im rückwärtigen Bereich des Sitzteiles an diesem befestigt ist. Hierfür weisen derartige Rückenlehnen zusammen mit dem Sitzteil Schwenkachsen auf, deren Verlauf in Sitzbreitenrichtung unterhalb einer Oberfläche eines Sitzpolsters, welches auf dem Sitzteil angeordnet ist, liegt.

Derartige Sitze sind verständlicherweise relativ schwer, da eine derartige Konstruktion ein in sich stabiles Sitzteil erfordert, an dem dauerhaft die Rückenlehne - auch im Falle eines Fahrzeugunfalles - gehalten werden soll.

Der Fahrer, dessen Gewicht mit dynamischen und statischen Kräften eines Fahrzustandes auf das Sitzteil einwirkt, wird durch das Sitzteil selber vorrangig in vertikaler Richtung, also in Fahrzeughöhenrichtung, gestützt, wohingegen die Rückenlehne die Funktion einer vorrangig horizontal ausgerichteten Stützung, also in Fahrzeugvorwärts- und Fahrzeugrückwärtsrichtung, im Wesentlichen ausführt.

Somit nimmt zumindest hinsichtlich der Kräfte, die sich in horizontaler Richtung ausrichten, der Übergang von der Rückenlehne zu dem Sitzteil, also die bereits erwähnte Schwenkachse, sämtliche Kräfte auf, die anschließend ebenso wie die in vertikaler Richtung wirkenden Kräfte über das Sitzteil und dem darunterliegenden Sitzteilunterbau auf die Bodenfläche, wie beispielsweise eine Karosserie bzw. Karosseriebodenbleche, abgeleitet werden müssen. Ein derartiger Kräfteverlauf ist nicht nur bezüglich einer optimalen Kräfteverteilung nachteilhaft, sondern erfordert auch eine stabile Konstruktion des Fahrzeugsitzes insgesamt, insbesondere in den Übergangsbereichen von der Rückenlehne zu dem Sitzteil und von dem Sitzteil in den Sitzteilunterbau sowie dem Sitzteilunterbau zu der Bodenfläche. Dies hat hohe Herstell- und Materialkosten und ein hohes Eigengewicht des Sitzes zur Folge.

Weiterhin ist aus der DE112007002640 T5 ein Sitz mit den Merkmalen des Oberbegriffs vom Anspruch 1 bekannt.

Demzufolge liegt der vorliegenden Erfindung die Aufgabe zugrunde, einen Sitz, insbesondere einen Fahrzeugsitz, zur Verfügung zu stellen, bei dem eine gute Kräfteverteilung trotz seines sehr geringen Eigengewichtes besteht und günstig hergestellt werden kann sowie einfach in seinem Aufbau ist.

Diese Aufgabe wird gemäß den Merkmalen des Patentanspruches 1 gelöst.

Ein wesentlicher Punkt der Erfindung liegt darin, dass bei einem Sitz, insbesondere einem Fahrzeugsitz, mit einem Sitzteil, welches eine Sitzfläche aufweist und gegenüber einer Bodenfläche im Bereich der Sitzvorderseite abgestützt ist, und mit einer Rückenlehne, die mit dem Sitzteil mittels einer Schwenkachse schwenkbar verbunden ist, die Rückenlehne ein unteres gegenüber der Bodenfläche abgestütztes Ende, welches sich bis oder nahezu bis zur Bodenfläche erstreckt, aufweist.

Durch einen derartigen Sitz ist es möglich, dass eine Kräfteeinleitung der durch die den Sitz benutzende Person wirkenden Kräfte in den Bodenbereich, beispielsweise in den Karosseriebereich bei Verwendung eines Fahrzeugsitzes, optimiert werden kann, da die Rückenlehne an sich gegenüber der Bodenfläche rückseitig abgestützt ist. Sitzvorderseitig ist das Sitzteil gegenüber der Bodenfläche abgestützt. Dies bedeutet, dass für die Rückseite des Sitzes die Rückenlehnenabstützelemente und für die Vorderseite des Sitzes Sitzteilabstützelemente zum Abstellen des Fahrzeugsitzes auf der Bodenfläche vorhanden sind.

Somit kann, wenn die Rückenlehne in sich biegesteif ist und in Höhenrichtung von einem oberen Ende bis zu einem unteren Ende durchgehend ausgebildet ist, erreicht werden, dass die auf die Rückenlehne durch die Person einwirkenden Kräfte über das untere Ende der Rückenlehne direkt zumindest teilweise abgeleitet werden. Unter Berücksichtigung des Umstandes, dass eine durch eine derartige Höhenrichtung durchgehende Rückenlehne eine Verschwenkung gegenüber dem Sitzteil um die erwähnte Schwenkachse erfährt, kann festgestellt werden, dass das untere Ende der Rückenlehne eine Art kreisbogenförmige Kraft in Vorwärts- oder Rückwärtsrichtung, bezogen auf den Fahrzeugsitz, auf die Bodenfläche überleitet. Zudem übernimmt das untere Ende der Rückenlehne die Einleitung von vertikal wirkenden Kräften, da für die Aufnahme von Gewichtskräften von der den Sitz benutzenden Person im rückwärtigen Bereich des Sitzes lediglich die als Abstützelemente ausgebildeten unteren Enden der Rückenlehne vorhanden sind.

Weitere vertikal wirkende Kräfte, die von der Bodenfläche aufgenommen werden sollen, werden durch das Sitzteil mit Abstützfußelementen oder dergleichen im vorderen Bereich des Sitzes nach unten weitergegeben.

Ein derartig aufgebauter Fahrzeugsitz hat nicht nur eine optimale Kräfteverteilung bezüglich der Überleitung von den auf den Fahrzeugsitz wirkenden Kräften auf die Bodenfläche, sondern auch bezüglich einer Überleitung von den auf den Fahrzeugboden oder Flächenboden wirkenden Kräften, wie sie beispielsweise durch Einleitung von externen Kräften bei Durchfahren von Schlaglöchern oder dergleichen entstehen könnten, auf den Fahrzeugsitz zur Folge.

Ebenso kann ein derartiger Sitz, insbesondere Fahrzeugsitz, vorteilhafte aus wenigen Teilen zusammengebaut werden, wie es beispielsweise aus einem Kunststoffmaterial, einem GFK-Faser verstärktem oder CFK-Faser verstärktem Material denkbar wäre. Mögliche Fasern sind auch Flachs, Aramidbasalt und ähnliche Fasern. Mögliche Kunststoffe sind beispielsweise Thermoplaste oder Duroplaste. Denn derartige Materialien ermöglichen eine nahezu einteilige bzw. einstückige Ausbildung eines Rückenlehnenrahmens, der - wie bereits erwähnt - von einem oberen Ende, an dem gegebenenfalls noch eine Kopfstütze angeordnet ist, oder diese bereits in den Rückenlehnenrahmen integriert ist, zu seinem unteren Ende, welches gegenüber der Bodenfläche abgestützt ist, sich erstreckt.

Ein derartiger Rückenlehnenrahmen ist dann schwenkbar mit einem Sitzteilrahmen verbunden, der ebenso vorteilhaft einstückig oder nahezu einstückig aus derartigen Materialien ausgebildet ist. Hierbei ist der Sitzteilrahmen mit vorderen Abstützfußelementen bzw. links- und rechtsseitigen Füßen gegenüber der Bodenfläche beabstandet und rückseitig ist er an der gemeinsamen Schwenkachse derart aufgehängt, dass er von dem Rückenlehnenrahmen, welcher ebenso auf der Bodenfläche steht, rückseitig gehalten wird. Somit ist ein einfacher Aufbau des gesamten Fahrzeugsitzes möglich.

Durch die Verwendung der bereits oben erwähnten Materialien, die selbstverständlich auch schalenformartig eingesetzt werden können, um derartige Rückenlehnen, Sitzteile und/oder Armlehnen schalenförmig auszubilden, ermöglichen insbesondere eine starke Gewichtsreduzierung des gesamten Fahrzeugsitzes gegenüber den bisher bekannten Fahrzeugsitzen, wobei dies sich auch auf herkömmliche Sitze, wie beispielsweise Bürostühle, Möbelstühle oder dergleichen bezieht.

Das mindestens eine Abstützfußelement der Rückenlehne ist mit einer Kurvenbahneinrichtung zum Gleiten des Abstützfußelementes entlang einer Kurvenbahn bei Durchführung einer Schwenkbewegung der Rückenlehne gegenüber dem Sitzteil in Sitzvorwärts- bzw. Sitzrückwärtsrichtung verbunden. Hierbei weist vorteilhaft die Kurvenbahn einen Verlauf auf, der sich auf einer Kreisbahn mit einem Radius befindet, wobei der Radius durch den Abstand von der Schwenkachse zu dem Abstützfußelement bestimmt ist.

Somit kann das untere Ende der Rückenlehne in Vorwärts- und Rückwärtsrichtung auf einer Kurvenbahn entlanggleiten und durch diese Kurvenbahneinrichtung gleichzeitig dauerhaft gegenüber der Bodenfläche, wie beispielsweise dem Karosserieboden eines Fahrzeuges, gehalten werden, um so auch eine stabile Schwenkbewegung der Rückenlehne gegenüber dem Sitzteil zu ermöglichen, sofern dies von der den Sitz benutzenden Person gewünscht ist.

Die bereits erwähnte Schwenkachse ist im rückwärtigen Bereich des Sitzteiles in Sitzbreitenrichtung verlaufend angeordnet, wobei die Schwenkachse bevorzugt oberhalb einer Sitzoberfläche des Sitzteiles, bevorzugt auf Höhe von zusätzlich angeordneten Armlehnen, angeordnet ist. Hierbei können die Armlehnen links- und rechtsseitig zusätzlich an der Schwenkachse schwenkbar angeordnet sein.

Auf diese Weise wird eine gemeinsame Schwenkachse sowohl für die Schwenkbewegung der Armlehnen als auch für die Schwenkbewegung der Rückenlehne gegenüber dem Sitzteil verwendet. Auch dies stellt eine Vereinfachung des Sitzes gegenüber bisher bekannten Sitzen dar. Zu beachten ist hierbei, dass die Rückenlehne nicht nur die gemeinsame Schwenkachse mit den Armlehnen verwendet, sondern hierbei auch noch die gewünschte Funktion der Kräfteeinleitung von dem Fahrzeugsitz in dessen rückwärtigen Bereich auf die Bodenfläche übernimmt.

Um ein gutes Kräfteverhältnis und gute Kraft-Hebelarm-Verhältnisse, die sich durch die durchgehend ausgebildete Rückenlehne in Bezug auf die Schwenkachse ergeben, zu erreichen, kann die Kräfteverteilung innerhalb des Fahrzeugsitzes noch weiter optimiert werden. Somit ist mitentscheidend, auf welcher Höhe die Schwenkachse in Bezug auf die Rückenlehne angeordnet wird und wie groß der Abstand von einem oberen Ende der Rückenlehne zu der Schwenkachse und wie groß der Abstand von einem unteren Ende der Rückenlehne, welches durch die Kurvenbahneinrichtung gehalten wird, zu der Schwenkachse ist.

Als optimal hat sich ein Längenverhältnis von einer ersten Länge, die sich von dem oberen Ende der Rückenlehne bis zu der Schwenkachse erstreckt, zu einer zweiten Länge, die sich von dem unteren Ende der Rückenlehne bis zu der Schwenkachse erstreckt, aus einem Bereich von 1 : 1 bis 3 : 1, bevorzugt aus einem Bereich von 1,8 : 1 bis 2,2 : 1 ergeben.

Weitere vorteilhafte Ausführungsformen ergeben sich aus den Unteransprüchen. Vorteile und Zweckmäßigkeiten sind der nachfolgenden Beschreibung in Verbindung mit der Zeichnung zu entnehmen. Hierbei zeigen:
- Fig. 1: in einer schematischen perspektivischen Darstellung einen Fahrzeugsitz gemäß einer Ausführungsform der Erfindung mit einer Rückenlehne, in der kein Rückenlehnenpolster eingesetzt ist;
- Fig. 2a, 2b: in einer Seitendarstellung den erfindungsgemäßen Fahrzeugsitz gemäß der Ausführungsform der Erfindung in einem unverschwenkten und in einem verschwenkten Rückenlehnenzustand; und
- Fig. 3: den in Fig. 2a und 2b dargestellten erfindungsgemäßen Fahrzeugsitz in einer Seitendarstellung mit eingezeichneten Längenverhältnissen bezüglich der an der Rückenlehne wirkenden Krafthebelarme.

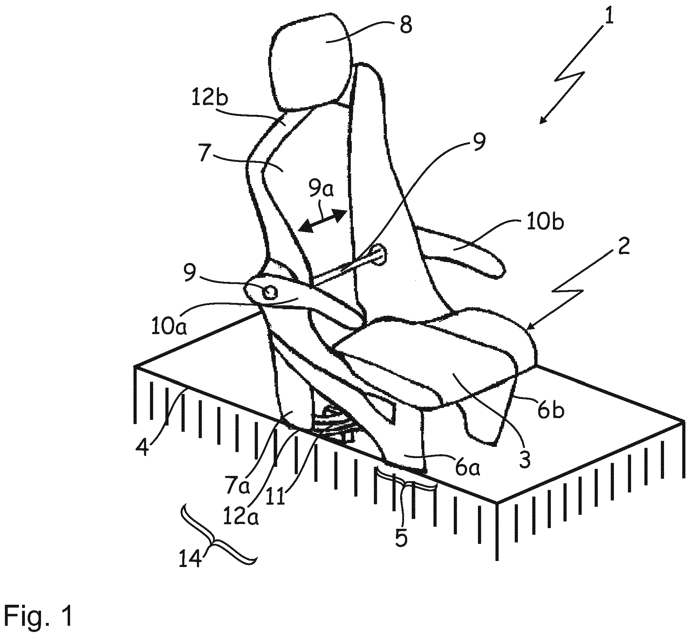

In Fig. 1 ist in einer schematischen perspektivischen Darstellung ein Fahrzeugsitz gemäß einer Ausführungsform der Erfindung gezeigt, wobei dieser Fahrzeugsitz 1 mit einem Sitzpolster 3 innerhalb eines Sitzteiles 2 dargestellt ist, jedoch ohne ein innerhalb einer Rückenlehne 7 angeordnetes Rückenlehnenpolster.

In einem vorderen Sitzbereich ist das Sitzteil 2 als Rahmenkonstruktion mit vorderen Füßen 6a und 6b bzw. Abstützfußelementen 6a und 6b gegenüber einem Karosserieboden abgestützt und auf diesen Abstützfußelementen abgestellt.

In einem rückwärtigen Bereich 14 ist der gesamte Fahrzeugsitz über die Abstützfußelemente 7a mit einer unteren Seite 12a der Rückenlehne 7 entweder direkt auf der Bodenfläche 4 abgestellt oder mittels einer Kurvenbahneinrichtung 11 an der Bodenfläche 4 befestigt.

Die Rückenlehne 7 hat einen in Höhenrichtung durchgehenden Verlauf von ihrem unteren Ende 12a bis zu ihrem oberen Ende 12b und kann als Ganzes um eine Schwenkachse 9, die in Sitzbreitenrichtung 9a läuft, gegenüber dem Sitzteil 2 geschwenkt werden. Hieraus ergibt sich ein Verschwenken nach vorne und ein leicht nach oben ausgerichtetes Verschwenken der unteren Seite 12a der Rückenlehne 7, welche durch die Kurvenbahneinrichtung 11 geleitet und stabilisiert wird.

An der Schwenkachse 9 sind zusätzlich Armlehnen 10a und 10b links- und rechtsseitig an dem Fahrzeugsitz angebracht.

Oberhalb der Rückenlehne kann zusätzlich eine Kopfstütze 8 angeordnet sein, die alternativ in die Rückenlehne 7 mitintegriert ist.

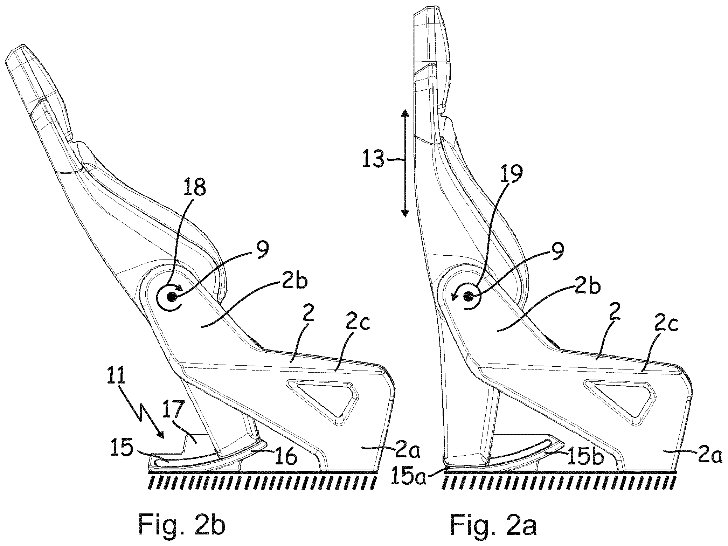

In Fig. 2a und 2b sind zwei Seitendarstellungen des erfindungsgemäßen Fahrzeugsitzes mit unverschwenkter und verschwenkter Rückenlehne 7 wiedergegeben. Diesen Darstellungen ist zu entnehmen, dass - wenn eine Schwenkbewegung entlang des Pfeiles 19 von der Rückenlehne 7 gegenüber dem Sitzteil 2 derart stattfindet, dass die Rückenlehne in ihrem oberen Bereich nach hinten geschwenkt wird und in ihrem unteren Bereich nach vorne bezüglich des Fahrzeugsitzes geschwenkt wird - das untere Ende 12a der Rückenlehne 7 entlang einer Kurvenbahn 16, 17, die innerhalb einem an der Bodenfläche 4 angebrachten Bauelement 17 angeordnet sind, nach vorne und nach oben verschwenkt wird.

Diese Kurvenbahn ist derart ausgebildet, dass sie als Bogenabschnitt mit einem Radius ausgestattet ist, welcher dem Abstand von der Schwenkachse 9 zu dem unteren Ende 12a der Rückenlehne 7 entspricht.

Die maßgeblichen Teile zur Bildung der Kurvenbahn sind ein kurvenförmiger Schlitz 15, in den an dem Abstützfußelement 7a angebrachte, hier nicht näher dargestellte seitliche Vorsätze eingreifen können.

Zudem ist eine bogenförmige Abstützbahn 16 angeordnet, auf der das untere Ende 12a der Rückenlehne 7 stützend entlangfahren kann, während eine Schwenkbewegung stattfindet.

Wenn, wie in Fig. 2b dargestellt, der Fahrzeugsitz mit einer verschwenkten Rückenlehne 7 wieder in eine Ausgangsstellung zurückkehren soll, dann findet eine Rückenlehnenverschwenkung in Pfeilrichtung 18 derart statt, dass das obere Ende 12b der Rückenlehne 7 nach vorne, also in Fahrzeugsitzrichtung nach vorne, verschwenkt wird und das untere Ende 12a der Rückenlehne 7 nach hinten verschwenkt wird. In dieser Stellung ist das Abstützfußelement 7a am hinteren Ende 15a der nutenförmig ausgebildeten Kurvenbahn 15 angeordnet, wohingegen bei einer vollständig verschwenkten Stellung der Rückenlehne 7 nach hinten das Abstützfußelement 7a das vordere Ende 15b der Kurvenbahn 15 erreicht.

Sobald das Ende 15a oder 15b erreicht ist, entsteht eine Anschlagswirkung, welche bewirkt, dass die Rückenlehne 7 nicht mehr weiter verschwenkt werden kann. Vorteilhaft kann hierdurch durch die Länge der Kurvenbahn 15 auch das Maß der Schwenkbewegung der Rückenlehne vorgegeben werden.

Um eine derart einfache und kräfteoptimierte Konstruktion des Fahrzeugsitzes zu erhalten, ist es erforderlich, dass die Rückenlehne 7 in Höhenrichtung 3 durchgehend erstreckend ausgebildet ist. Dies bedeutet, dass die Rückenlehne von ihrem oberen Ende bis zu ihrem unteren Ende idealerweise zumindest in dieser Richtung einstückig ausgebildet ist.

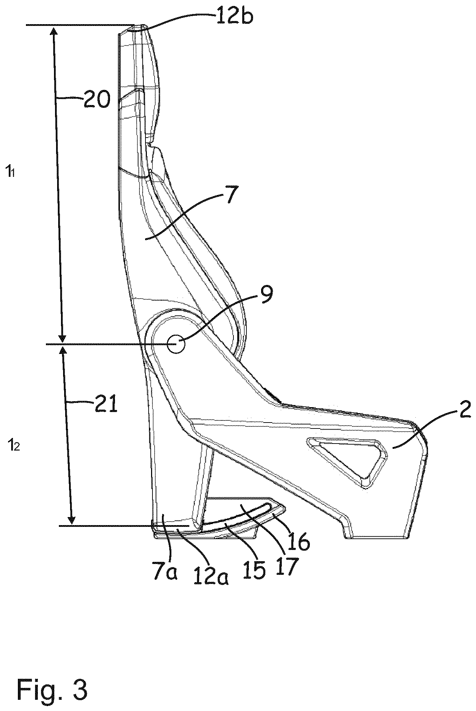

Auf diese Weise kann vorteilhaft die Krafthebelwirkung bezüglich der Schwenkachse 9 erhalten werden, die es ermöglicht, dass mit geringer Kraft im Bereich der Kurvenbahneinrichtung das untere Ende der Rückenlehne in einer bestimmten Stellung, die vorbestimmbar ist, gehalten werden kann. Dies ergibt sich hauptsächlich durch einen relativ langen Krafthebel 21, wie er in Fig. 3, die ebenso eine seitliche Darstellung des Fahrzeugsitzes wiedergibt, zu sehen ist. Dieser Krafthebel 21 ergibt sich aus der Länge des Abstandes von der Schwenkachse 9 zu dem unteren Ende 12a der Rückenlehne.

Ein weiterer Krafthebelarm 20 ergibt sich aus der Länge des Abstandes von der Schwenkachse 9 zu dem oberen Ende 12b der Rückenlehne.

Es ist leicht nachvollziehbar, dass aufgrund des relativ langen Krafthebelarmes 21 ein leichtes Kontrollieren der Schwenkbewegung der Rückenlehne mittels der Kurvenbahn oder Kurvenbahneinrichtung möglich ist.

Idealerweise ist die Schwenkachse hierfür einiges höher angeordnet, als es sonst üblich ist. Dies bedeutet, dass die Schwenkachse 9 - in Fahrzeugsitzbreitenrichtung verlaufend - einiges oberhalb einer Oberflächenebene 2c eines Sitzpolsters des Sitzteiles 2 angeordnet ist. Erreicht wird dies durch eine sich nach oben erstreckende Ausbildung 2b in der Form von Fortsätzen des Sitzteiles, wobei sich diese Fortsätze links- und rechtsseitig des Fahrzeugsitzes erstrecken.

### Bezugszeichenliste

- 1: Fahrzeugsitz
- 2: Sitzteil
- 2a: Sitzteilfuß
- 2b: sich nach oben erstreckende Fortsätze
- 2c: Oberflächenebene/Sitzoberfläche
- 3: Sitzpolster/Höhenrichtung
- 4: Bodenfläche
- 5: Sitzvorderseite
- 6a: vordere Füße/Abstützfußelemente
- 6b: vordere Füße/Abstützfußelemente
- 7: Rückenlehne
- 7a: Abstützfußelemente
- 8: Kopfstütze
- 9: Schwenkachse
- 9a: Sitzbreitenrichtung
- 10a: Armlehnen
- 10b: Armlehnen
- 11: Kurvenbahneinrichtung
- 12a: untere Seite/unteres Ende
- 12b: oberes Ende
- 13: Höhenrichtung
- 14: rückwärtiger Bereich
- 15: Schlitz/Kurvenbahn
- 15a: hinteres Ende
- 15b: vorderes Ende
- 16: Abstützbahn/Kurvenbahn
- 17: Kurvenbahn/Bauelement
- 18: Pfeilrichtung/Schwenkbewegung
- 19: Pfeil/Schwenkbewegung
- 20: Krafthebelarm/erste Länge
- 21: Krafthebel/Abstand

## Patentansprüche

1. Sitz, insbesondere ein Fahrzeugsitz (1), mit einem Sitzteil (2), welches eine Sitzfläche (3) aufweist und gegenüber einer Bodenfläche (4) im Bereich der Sitzvorderseite (5) abgestützt ist, und mit einer Rückenlehne (7), die mit dem Sitzteil (2) mittels einer Schwenkachse (9) schwenkbar verbunden ist, wobei
die Rückenlehne (7) mindestens ein unteres gegenüber der Bodenfläche (4) abgestütztes Ende (12a) aufweist, wobei das Ende (12a) sich bis oder nahezu bis zur Bodenfläche (4) erstreckt und bei einer Schwenkbewegung, bei der die Rückenlehne (7) im oberen Bereich nach hinten geschwenkt wird, nach vorne bezüglich des Fahrzeugsitzes geschwenkt wird, wobei
das untere Ende (12a) der Rückenlehne (7) mindestens ein in einem Bereich der Sitzrückseite (14) angeordnetes Abstützfußelement (7a) zur Abstützung des Sitzes (1)
gegenüber der Bodenfläche (4) darstellt, **dadurch gekennzeichnet, dass** das Abstützfußelement (7a) mit einer
Kurvenbahneinrichtung (11) zum Gleiten des Abstützfußelementes (7a) entlang einer Kurvenbahn (15, 16) bei Durchführung einer Schwenkbewegung (18, 19) der Rückenlehne (7) gegenüber dem Sitzteil (2) in Sitzvorwärts- und Sitzrückwärtsrichtung verbunden ist.

2. Sitz nach Anspruch 1,
**dadurch gekennzeichnet, dass**
die Rückenlehne (7) in Höhenrichtung (13) von einem oberen Ende (12b) bis zu dem unteren Ende (12a) durchgehend ausgebildet ist.

3. Sitz nach Anspruch 1 oder 2,
**dadurch gekennzeichnet, dass**
die Kurvenbahn (15, 16) einen Verlauf aufweist, der sich auf einer Kreisbahn mit einem Radius befindet, wobei der Radius durch den Abstand (21) von der Schwenkachse (9) zu dem Abstützfußelement (7a) bestimmt ist.

4. Sitz nach einem der vorangegangenen Ansprüche,
**dadurch gekennzeichnet, dass**
die Schwenkachse (9) im rückwärtigen Bereich (14) des Sitzteiles (2) in Sitzbreitenrichtung (9a) verlaufend angeordnet ist.

5. Sitz nach einem der vorangegangenen Ansprüche,
**dadurch gekennzeichnet, dass**
die Schwenkachse (9) oberhalb einer Sitzoberfläche (2c) des Sitzteiles (2), bevorzugt auf Höhe der Armlehnen (10a, 10b), angeordnet ist.

6. Sitz nach einem der vorangegangenen Ansprüche,
**dadurch gekennzeichnet, dass**
an der Schwenkachse (9) zusätzlich mindestens eine Armlehne (10a, 10b) schwenkbar angeordnet ist.

7. Sitz nach einem der vorangegangenen Ansprüche,
**dadurch gekennzeichnet, dass**
eine Längenverhältnis von einer ersten Länge (20), die sich von dem oberen Ende (12b) der Rückenlehne (7) bis zu der Schwenkachse (9) erstreckt, zu einer zweiten Länge (21), die sich von dem unteren Ende (12a) der Rückenlehne (7) bis zu der Schwenkachse (9) erstreckt, in einem Bereich von 1 : 1 bis 3 : 1, bevorzugt in einem Bereich von 1,8 : 1 bis 2,2 : 1 liegt.

8. Sitz nach einem der vorangegangenen Ansprüche,
**dadurch gekennzeichnet, dass**
ein Sitzteilrahmen, ein Rückenlehnenrahmen und ein Armlehnenrahmen jeweils einstückig aus Kunststoff mit oder ohne Faserverstärkung ausgebildet ist.

## Claims

1. Seat, in particular a vehicle seat (1), comprising a seat part (2) which has a seat surface (3) and is supported relative to a floor surface (4) in the region of the front side (5) of the seat, and comprising a backrest (7) which is pivotally connected to the seat part (2) by means of a pivot shaft (9), the backrest (7) having at least one lower end (12a) which is supported relative to the floor surface (4), the end (12a) extending as far as or almost as far as the floor surface (4) and being pivoted forwards with respect to the vehicle seat during a pivoting movement in which the upper region of the backrest (7) is pivoted backwards, the lower end (12a) of the backrest (7) constituting at least one supporting foot element (7a) arranged in a region of the rear side (14) of the seat for supporting the seat (1) relative to the floor surface (4), **characterised in that** the supporting foot element (7a) is connected to a curved track device (11) for sliding the supporting foot element (7a) along a curved track (15, 16) when the backrest (7) undergoes a pivoting movement (18, 19) relative to the seat part (2) in a forward and backward direction of the seat.

2. Seat according to claim 1, **characterised in that** the backrest (7) is designed so as to be continuous in the vertical direction (13) from an upper end (12b) to the lower end (12a).

3. Seat according to either claim 1 or claim 2, **characterised in that** the curved track (15, 16) has a shape which is on a circular path having a radius, the radius being defined by the distance (21) between the pivot shaft (9) and the supporting foot element (7a).

4. Seat according to any of the preceding claims, **characterised in that** the pivot shaft (9) is arranged so as to extend in the rear region (14) of the seat part (2) in the seat width direction (9a).

5. Seat according to any of the preceding claims, **characterised in that** the pivot shaft (9) is arranged above a seat surface (2c) of the seat part (2), preferably at the level of the armrests (10a, 10b).

6. Seat according to any of the preceding claims, **characterised in that**, in addition, at least one armrest (10a, 10b) is pivotally arranged on the pivot shaft (9).

7. Seat according to any of the preceding claims, **characterised in that** a length ratio of a first length (20), which extends from the upper end (12b) of the backrest (7) to the pivot shaft (9), to a second length (21), which extends from the lower end (12a) of the backrest (7) to the pivot shaft (9), is in a range of from 1:1 to 3:1, preferably in a range of from 1.8:1 to 2.2:1.

8. Seat according to any of the preceding claims, **characterised in that** a seat part frame, a backrest frame and an armrest frame are each integrally formed from plastics material, with or without fibre reinforcement.

## Revendications

1. Siège, plus particulièrement siège de véhicule (1), avec une partie d'assise (2), qui comprend une surface d'assise (3) et qui est soutenue par rapport à une surface du sol (4) au niveau de l'avant du siège (5) et avec un dossier (7) qui est relié de manière pivotante avec la partie d'assise (2) au moyen d'un axe de pivotement (9),
le dossier (7) comprenant au moins une extrémité (12a) inférieure soutenue par rapport à la surface du sol (4), l'extrémité (12a) s'étendant jusqu'à ou presque jusqu'à la surface du sol (4) et, lors d'un mouvement de pivotement, lors duquel le dossier (7) est pivoté vers l'arrière dans la zone supérieure, étant pivotée vers l'avant par rapport au siège du véhicule,
l'extrémité inférieure (12a) du dossier (7) constituant au moins un élément de pied d'appui (7a) disposé au niveau de l'arrière du siège (14) pour le soutien du siège (1) par rapport à la surface du sol (4), **caractérisé en ce que**
l'élément de pied d'appui (7a) est relié avec un dispositif à piste courbe (11) pour le glissement de l'élément de pied d'appui (7a) le long d'une piste courbe (15, 16) lors de la réalisation d'un mouvement de pivotement (18, 19) du dossier (7) par rapport à la partie d'assise (2) vers l'avant et vers l'arrière du siège.

2. Siège selon la revendication 1,
**caractérisé en ce que**
le dossier (7) est conçu de manière continue dans le sens de la hauteur (13) d'une extrémité supérieure (12b) jusqu'à l'extrémité inférieure (12a).

3. Siège selon la revendication 1 ou 2,
**caractérisé en ce que**
la piste courbe (15, 16) présente une extension qui se trouve sur une piste courbe avec un rayon, le rayon étant déterminé par la distance (21) entre l'axe de pivotement (9) et l'élément de pied d'appui (7a).

4. Siège selon l'une des revendications précédentes,
**caractérisé en ce que**
l'axe de pivotement (9) est disposé de façon à s'étendre dans la zone arrière (14) de la partie d'assise (2) dans le sens de la largeur du siège (9a).

5. Siège selon l'une des revendications précédentes,
**caractérisé en ce que**
l'axe de pivotement (9) est disposé au-dessus d'une surface de siège (2c) de la partie d'assise (2), de préférence à hauteur des dossiers (10a, 10b).

6. Siège selon l'une des revendications précédentes,
**caractérisé en ce que**
sur l'axe de pivotement (9) est disposé en outre au moins un dossier (10a, 10b).

7. Siège selon l'une des revendications précédentes,
**caractérisé en ce que**
un rapport de longueur entre une première longueur (20), qui s'étend de l'extrémité supérieure (12b) du dossier (7) jusqu'à l'axe de pivotement (9), et une deuxième longueur (21), qui s'étend entre la première extrémité (12a) du dossier (7) jusqu'à l'axe de pivotement (9), se trouve dans une plage entre 1:1 et 3:1, de préférence dans une plage entre 1,8:1 et 2,2:1.

8. Siège selon l'une des revendications précédentes,
**caractérisé en ce que**
un cadre partiel de siège, un cadre de dossier et un cadre d'accoudoir sont réalisés chacun d'un seul bloc en matière plastique avec ou sans renforcement par des fibres.
